Europäisches Patentamt

European Patent Office

Office européen des brevets

(11) Publication number: **0 032 841**
A1

# EUROPEAN PATENT APPLICATION

(21) Application number: 81300249.0

(51) Int. Cl.³: **A 23 L 3/32**

(22) Date of filing: **20.01.81**

(30) Priority: **21.01.80 GB 8001997**

(43) Date of publication of application: **29.07.81**
Bulletin 81/30

(84) Designated Contracting States: **AT BE CH DE FR IT LI LU NL SE**

(71) Applicant: **THE ELECTRICITY COUNCIL, 30 Millbank, London, SW1P 4RD (GB)**

(72) Inventor: **Stirling, Robert, Robin Hey Station Road, Heswell (GB)**

(74) Representative: **Rennie, Ian Malcolm et al, BOULT, WADE & TENNANT 27 Furnival Street, London EC4A 1PQ (GB)**

(54) Apparatus for heating electrically conductive flowable media.

(57) Apparatus for heating liquid foodstuffs has at least three electrodes 14 spaced along a pipe 10, 12, 13 to make contact with material flowing in the pipe. Power supply 15, 16 causes current to flow in the material between electrodes. The pipe lengths 12 and 13 between adjacent pairs of electrodes 14 are different lengths selected to make the electrical resistance in the material between the adjacent pairs of electrodes substantially equal. Since the resistivity normally falls for increasing temperature, the downstream pipelength 13 is longer.

EP 0 032 841 A1

## APPARATUS FOR HEATING ELECTRICALLY
## CONDUCTIVE FLOWABLE MEDIA

This invention is concerned with apparatus for heating electrically conductive flowable media, typically liquids. It is commonly necessary to heat flowable media to elevated temperatures for example to perform a chemical reaction, or, where the flowable medium is a foodstuff, to cook or sterilise the foodstuff. Conventional methods of applying heat to flowable media such as liquids include plate heat exchangers, autoclaves, steam or hot water-jacketed vessels and hot-air ovens. Such conventional methods may provide certain problems arising, for example, from the uneven temperature distribution established in the media according to the laws of heat conduction from a hot surface into the cold medium. Further, the rate of heat input into the medium is dependent on the surface area of the heating element in contact with the medium and the maximum temperature to which the medium immediately adjacent the heating surface can be raised without some deleterious effect. For example, in the heating of liquid foodstuffs such as dairy products requiring pasteurisation or sterilisation, the product is liable to protein denaturation at an excessively hot heat exchange surface. Furthermore, the surface area of the heat exchanger is also restricted since high surface areas entail fine mesh heat exchange structures which restrict flow of the media and can readily be fouled by viscous media or media with solid particles entrained. Furthermore, fouling of the heat exchange surface can occur due to the excessive temperature at the heat exchange surface, which again leads to a diminished heat transfer rate from the fouled surface which progressively compounds the problem. Fouling also increases the pressure drop required across the heat exchanger to ensure flow of the medium.

Canned produce containing meat, vegetable or fruit components in a liquid base are commonly autoclaved to achieve sterility. Over-cooking can occur at the can's surface with consequent loss of texture, flavour and nutritional value. Further, certain delicate foods containing, for instance, a yogurt or starch base, could benefit from a sterilising process offering very rapid heating rates which themselves can be difficult to achieve with known hot surface heat exchanger techniques.

0032841

It is already known to heat flowable media such as liquids by causing an electric current to flow directly in the media between pairs of electrodes. Such direct electrical ohmic heating of the medium can permit high rates of heat input to the medium so enabling relatively rapid heating rates. The basic problem of heating by conduction from a hot heat exchanger surface is also obviated.

According to the present invention, apparatus for heating an electrically conductive flowable medium comprises pipe means through which the medium can be arranged to flow at a predetermined rate, the pipe means being made of or internally lined with a material having an electrical conductivity no greater than that of the medium, at least three electrodes spaced at selected intervals along the pipe means and arranged to make electrical contact with the medium flowing therethrough, and supply means for applying an alternating electrical supply having a common R.M.S. voltage value across each adjacent pair of said electrodes so that alternating current can flow in the medium between the pairs of electrodes, the pipe means having respective length portions between said adjacent pairs of electrodes and the geometrical proportions of said respective portions being selected to be different relative to one another so that the respective electrical resistance values in the medium between said pairs of electrodes are substantially equal to one another when the apparatus is in use.

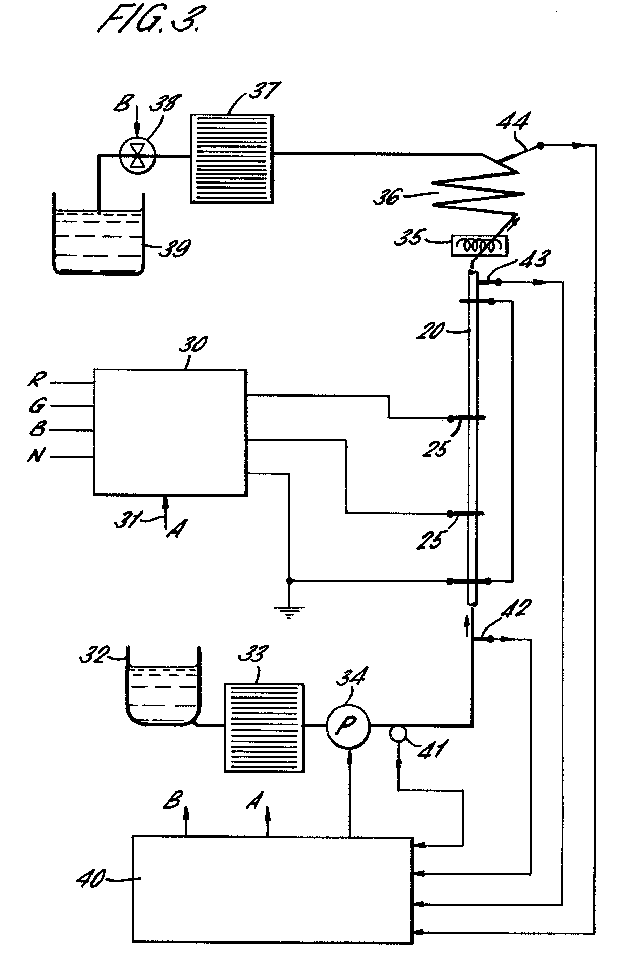

With such apparatus, electric current is made to flow in the medium parallel to the direction of flow of the medium between the pairs of electrodes spaced along the length of the pipe means. An arrangement of this kind has been proposed before as indicated in the article entitled "Pasteurisation of Milk by Electricity", by F. H. McDowall, pages 275 to 291 of The New Zealand Journal of Science and Technology, February 1929. The "Electro-Pasteur" described in this article is used for pasteurising milk by ohmically heating milk by electric currents flowing between electrodes spaced at intervals along a pipe. However, as can be seen in Figure 4 of the article page 281, the electrodes are shown at equally spaced intervals along the pipe and the pipe itself is of substantially constant cross-section. It will be appreciated that the milk heated in the apparatus described in the article becomes progressively hotter as it flows from the inlet to the outlet of the heating tube. As a result, the milk between the last pair of electrodes in the tube will be very much hotter than that between the first pair immediately after the inlet. The electrical conductivity of milk as with most other media varies significantly with temperature so that the electrical resistance between the last pair of electrodes will be significantly lower than between the first pair resulting in an imbalance in the current flows from the power supply to the various sections of the heating pipe.

In the apparatus of the present invention, on the other hand, the geometry of the length portions of the pipe means between the respective adjacent pairs of electrodes is adjusted one relative to the next so that the electrical resistance values in the medium between the pairs of electrodes are maintained substantially equal to one another when the apparatus is operating. This can be achieved by making the length portions of the pipe means nearer the upstream end of somewhat greater cross-sectional area than those further downstream. This has the direct effect of reducing the electrical resistance between the pairs of electrodes at opposite ends of the fatter length portions and also increases the residence time of the medium in these fatter portions so that the average temperature in them is somewhat higher in any case.

Preferably, however, the geometrical variation is achieved with length portions of the pipe means which are all of the same cross-section but the length portions having respective lengths which increase from the upstream end of the pipe means to the downstream end. It can be seen that the greater spacing between the pairs of electrodes at the downstream end of the pipe means raises the electrical resistance in the medium between these pairs of electrodes and by carefully selecting the lengths of the various length portions the electrical resistances between the pairs of electrodes can be rendered substantially equal to one another when the apparatus is operating to heat a medium.

In one example, there are four spaced electrodes providing three said length portions. Then, said length portions may have respective lengths in the ratios3:5:7. In a preferred arrangement, said supply means comprises means for applying a three-phase alternating voltage supply with one phase connected to both the two electrodes at or adjacent the ends of the pipe means and the other two phases connected to respective ones of the two intermediate electrodes. Then said three-phase supply may be connected via the delta-connected secondary windings of a three-phase transformer, with one terminal of the secondary winding connected to the two end electrodes and to earth. This arrangement ensures that the medium flowing into the upstream end and out of the downstream end of the pipe means is substantially at earth potential.

Examples of the present invention will now be described with reference to the accompanying drawings, in which :-

Figure 1 illustrates an example of the invention having three electrodes and for connection to a single-phase supply of alternating current;

Figure 2 illustrates a different embodiment of the invention having four spaced electrodes for connection to a three-phase supply of alternating current;          and

Figure 3 is a schematic diagram of a complete heat treatment system incorporating the apparatus of the present invention.

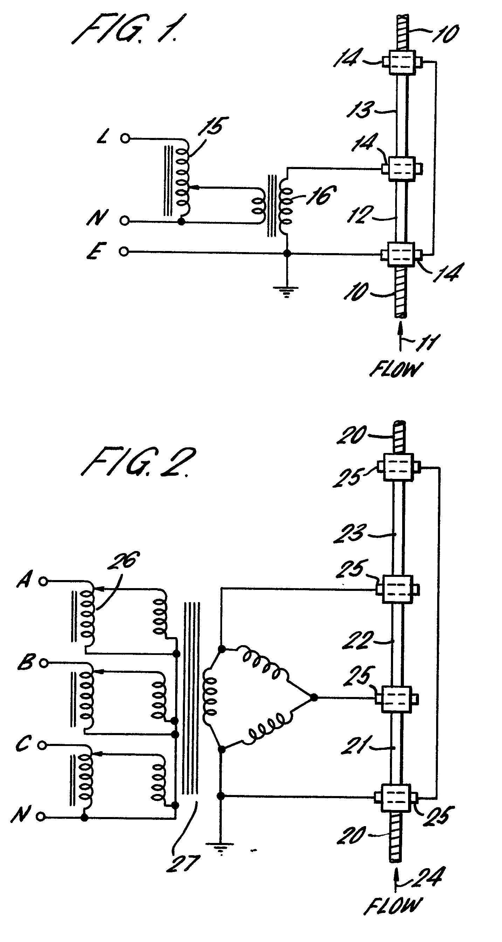

Referring to Figure 1, there is generally indicated at 10 a pipe for the flowable medium to be heated.  The medium is typically   a liquid and the embodiments to be described hereinafter have been designed especially, though not exclusively, with the problem in mind of heating flowable foodstuffs, for example in the food processing industry.  The pipe is connected, in use, to means such as a positive displacement pump, for producing a flow of the medium in the direction of arrow 11 through the pipe 10. Such means might comprise a pump conveying the foodstuff from one vat to another in a foodstuff treatment process.

The pipe 10 has two sections 12 and 13 which are made so that the material flowing inside these sections is electrically insulated from the outside of the pipe. To achieve this, the entire pipe sections 12 and 13 may be made from an insulating material, or the pipes may be internally lined with an insulating material. It is preferable that the insulating material employed is a "good" insulator i.e. having a very low electrical conductivity, although the apparatus can be made to work provided the conductivity of the insulating material employed is less than that of the medium flowing in the pipe.

The insulating pipe sections 12 and 13 space apart three electrodes 14. The electrodes 14 are each arranged to have electrode surfaces which are exposed to medium flowing along the pipe 10. An autotransformer 15 connected to a step up transformer 16 is arranged to provide a variable alternating voltage, for example, from the mains electricity supply. The secondary winding of the step up transformer 16 is connected to the electrodes 14 so that the two end electrodes are at earth potential and the centre electrode 14 is live. As a result, electrical current is made to flow between adjacent pairs of the electrodes through the medium flowing in the pipe. The current flows in the medium longitudinally with respect to the insulating pipe sections 12 and 13. It will be understood that the medium flowing in the pipe 10 will, thereby, be heated by the current flowing between the centre electrode and the bottom electrode as the medium passes through the pipe section 12, so that on entering the pipe section 13, the medium is already at an increased temperature. Thus, the mean temperature of medium at any time in pipe section 12 is lower than that of medium in pipe section 13. Since the electrical resistivity of most material falls with increasing temperature, normally the resistivity of medium in pipe section 13 is lower than that of the medium in pipe section 12. Thus, if the geometry of the two pipe sections 12 and 13 relative to the electrodes at the ends of the sections was identical, more current would flow between the electrodes at the ends of section 13 than between those at the ends of section 12. Thus, in order to cancel out or at least substantially reduce this imbalance in electrical current, and hence the heating effect in the two sections, the geometry of section 13 relative to section 12 is selected so that the electrical resistance between the centre electrode 14 and the upper electrode in Figure 1 is substantially the same as that between the centre electrode and the bottom electrode at Figure 1 when the apparatus is operating. It will be appreciated that the geometrical differences between the two sections could be achieved by making the

0032841

-10-

bottom section 12 of somewhat greater cross-sectional area than the upper section 13, with these sections remaining the same length. This would directly reduce the effective resistance between the centre electrode and the bottom electrode. However, preferably the cross-section of the two sections 12 and 13 is substantially the same and the geometrical difference is achieved by making the upper section 13 somewhat longer than section 12, so that the resistance between the centre electrode and the upper electrode is somewhat increased so as to be substantially the same as that between the bottom two electrodes. It will be appreciated that the amount of the geometrical difference between the two pipe sections is dependent on the difference between the mean temperatures of medium in the two sections, which in turn is dependent on the temperature differential across the entire heater, and also dependent upon the temperature co-efficient of resistance of the medium being heated. However, for the treatment of any one selected medium, for example heating a custard mixture, the proper length differential between the two sections can be found empirically.

The form and construction of the electrodes 14 is important. It is important to ensure that the electrodes are made of a material which is not excessively eroded by electrolytic action during the heating process and does not introduce undesirable impurities into the medium being heated. Electrodes made of graphite impregnated with resin to eliminate porosity have been found to work satisfactorily. However, it is preferred if the electrodes are formed with a platinum coating exposed to the medium. The shape of the electrode surfaces exposed to the medium in the pipe 10 is also important. Electrodes in the form of annular collars flush with the interior surface of the pipe 10 have been made to work. However, it is preferred for the electrodes to be shaped as cylinders extending transversely of the axis of the pipe and mounted in enlarged cavities in the pipe. A preferred form of electrode and housing therefor is described in more detail and claimed in the co-pending application No.

Referring now to Figure 2, there is illustrated an arrangement similar to that of Figure 1 but for use with a three-phase alternating power supply. In Figure 2 a pipe 20 comprises three insulating pipe sections 21, 22 and 23. Once again, the apparatus includes means (not shown) for producing a flow through pipe 20 in the direction of arrow 24. Interspaced between the insulating pipe sections are four electrodes 25 which may be of the same form as described above. A three-phase alternating supply is connected to the electrodes via a three-phase autotransformer 26 and a three-phase step up transformer 27 having delta-connected secondary windings for connection to the electrodes 25. Thus, one terminal of the secondary windings is connected to the outer electrodes, at the bottom and top in Figure 2, and also to earth. The other two terminals of the secondary winding are connected to the two intermediate electrodes 25. Thus, it can be seen that a different phase of alternating voltage is applied between each adjacent pair of electrodes, but in each case the R.M.S. voltage applied across the electrodes is the same. Having the outer two electrodes earthed, minimises any risk of current flowing in the medium either before the inlet or after the outlet of the heater portion.

Once again, the medium flowing in the pipe 20 is progressively heated as it passes from the first section 21 to the second section 22 and finally to the third section 23. In order to substantially eliminate the difference in resistance between the adjacent pairs of electrodes across the three sections, the sections are made progressively longer from the upstream end of the pipe 20 to the downstream end as is illustrated in Figure 2.

An operative embodiment of the apparatus of Figure 2 employed a pipe 20 with a bore of 1 inch. The pipe sections 21, 22, and 23 were 300mm, 500mm and 700mm long respectively, increasing in the direction of flow of the foodstuff. A standard three-phase supply voltage at 440V can be connected to the input of the autotransformer 26 and the secondary voltages applied between the terminals of the delta connected secondary of the transformer 27 may range from a few volts (say, 24V), for a relatively highly conductive medium, up to several kV's (say, 3.3kV).

Referring now to Figure 3, there is shown in schematic form a complete heat treatment process incorporating a heater of the form illustrated in Figure 2. Thus, the pipe 20 is shown with the four electrodes 25 connected to the delta connected secondary of a step up transformer as before. However, in the present example, the transformers 26 and 27 of Figure 2 are represented by a box 30. In the box 30, the autotransformer is remotely controllable by means of a signal received on a control line 31. Medium, particularly a foodstuff, to be heat treated is drawn from a supply vat 32 through a heat exchanger 33 by a positive displacement pump 34 and pumped up through the pipe 20. At the output of the pipe 20, the medium passes through a static mixer 35 to ensure good mixing of any solid particles entrained in the liquid to enhance the cooking or dissolving process. From the static mixer 35, the material passes through a holding section 36 of pipe at which the liquid is held substantially at the elevated temperature from the output of the heating pipe 20 for a predetermined length of time.

From the holding section 36, the liquid passes into a further heat exchanger 37. The heat exchangers 37 and 33 may together form a regenerator whereby the liquid from the supply vat 32 is pre-heated in the exchanger 33 by heat drawn from the output of the heater at the exchanger 37. It will be appreciated that the heater may be effective to raise the temperature of the liquid above its normal boiling point and therefore the system is pressurised by means of a back pressure valve 38. The heat exchanger 37 ensures that the liquid from the heater is cooled again to below its normal boiling point before passing through the back pressure valve 38 and into a product collection vat 39.

It will be appreciated that it will be important to monitor the pressure of the liquid in the heater pipe 20 and the back pressure valve 38 may be remotely operable by a proprietary controller in response to the measured pressure. Similarly, the rate of flow produced by the positive displacement pipe 34 may be remotely controllable by a further controller monitoring the rate of flow. Still further, the temperature to which the liquid is heated by the electrical heater may be monitored at one or more suitable points downstream of the pipe 20 and the voltage supplied to the electrodes 25 may be controlled at the autotransformer 30 in response thereto.

Conveniently, all these control functions may be performed by means of a suitably programmed computer as illustrated at 40 in Figure 3. The computer 40 receives signals from a flow rate sensor 41 located immediately after the pump 34, from a pressure sensor 42 located at the input to the heater pipe 20, and from two or more temperature sensors 43 and 44 which may be located as illustrated immediately at the output of the pipe 20 and also at a point downstream of the holding section 36. In response to these input signals, the computer 40 may provide output signals in response to its programme to control the pump 34 in order to establish a desired flow rate. Further, an output (identified A) from the computer 40 can provide the control to the autotransformer 30 to set the voltage between the electrodes 25, and an output from the computer (identified B) may supply a control signal to the back pressure valve 38. The computer may be programmed so as to ensure primarily that the fluid being treated acquires a desired temperature which is substantially maintained in the holding section 36 for a desired length of time. To achieve this, it will be appreciated that not only must the electrical power delivered to the electrodes be controlled to ensure the desired amount of electrical heating, but also the flow rate provided by the pump 34 must be controlled to ensure the correct residence time in the section 36. Furthermore, simultaneously, the pressure in the system is monitored to
ensure that the back pressure valve 38 is set suitably to
maintain the pressure sufficiently to prevent boiling.

In one example, the fluid treated in a system such as
illustrated in Figure 3 might be a mixture of custard powder
and sugar in milk, essentially comprising a liquid with a
fine suspension of powder. With the pipe 20 having
dimensions of the example described above, and the voltage
across each pair of electrodes set at about 3.3kV (50 Hz)
the custard is pumped into the pipe 20 by the positive
displacement pump at a pressure of 85 p.s.i.g. at a flow
rate of 4.5 litres per minute. The custard is pre-heated
by means of the heat exchanger 33 from 10 to $15^{\circ}C$ to
between 45 and $60^{\circ}C$. It should be noted that it is undesirable to heat this particular product above about $70^{\circ}C$
in a heat exchanger as thickening then occurs resulting in
adhesion of the fluid to the heat transfer surfaces and
subsequent burning. The warmed custard mix is then passed
through the pipe 20 where it is heated to $140^{\circ}C$. The
transit time between the input and output of the pipe 20
is about ten seconds. The holding section 36, comprising
some five metres of pipework, retains the custard at the
elevated temperature, about $140^{\circ}C$, for about 20 seconds,
whereafter the custard is passed through the heat exchanger
37 where its temperature is brought down to about $70^{\circ}C$,

i.e. below boiling. The custard then passes through the back pressure valve 38 and into the product collection vat 39.

It has been found that heating the liquid rapidly (in about ten seconds) and retaining the liquid for a relatively short time (about 20 seconds) at 140°C, serves effectively to kill any bacteria in the custard, rendering it sterile and suitable for canning or aseptic packaging. However, the high temperature short time sterilisation process does not appear to break down the starches and other long chain molecules which give the product its characteristic taste and texture so that the product taste and quality is not impaired. By comparison, a so-called "scraped-surface" heat exchanger could not achieve 140°C without the product burning on to the heat exchanger surfaces. Nor could such a conventional exchanger handle such relatively high flow rates heating them in such short times as 10 seconds even to lower maximum temperatures.

**0032841**

CLAIMS:

1. Apparatus for heating an electrically conductive flowable medium, comprising pipe means (10, 12,13) through which the medium can be arranged to flow (11) at a predetermined rate, the pipe means being made of or internally lined with a material having an electrical conductivity no greater than that of the medium, at least three electrodes (14) spaced at selected intervals along the pipe means and arranged to make electrical contact with the medium flowing therethrough, and supply means (15,16) for applying an electrical supply to the electrodes, characterised in that the supply means (15,16) is arranged to apply an alternating electrical supply having a common R.M.S. voltage value across each adjacent pair of said electrodes (14) so that alternating current can flow in the medium between the pair of electrodes, the pipe means having respective length portions (12,13) between said adjacent pairs of electrodes and the geometrical proportions of said respective portions (12,13) being selected to be different relative to one another so that the respective electrical resistance values in the medium between said pairs of electrodes are substantially equal to one another when the apparatus is in use.

2. Apparatus as claimed in claim 1, characterised in that said length portions (12,13) of the pipe means are all of the same cross-section and have respective lengths which increase from the upstream end to the downstream end of the pipe means.

3. Apparatus as claimed in claim 2, characterised in that there are four spaced electrodes (25) providing three said length portions (21,22,23).

4. Apparatus as claimed in claim 3, characterised in that said length portions (21-23) have respective lengths in the ratios 3:5:7.

5. Apparatus as claimed in claim 3 or claim 4, characterised in that said supply means comprises means (26,27) for applying a three-phase alternating voltage supply with one phase connected to both the two electrodes at or adjacent the ends of the pipe means and the other two phases connected to respective ones of the two intermediate electrodes.

6. Apparatus as claimed in claim 5, characterised in that said three-phase supply is connected via the delta-connected secondary windings of a three-phase transformer (27) with one terminal of the secondary winding connected to the two end electrodes and to earth.

IMR/REC/MEB/JC/BA1212

112

FIG. 1.

L

N

E

15

16

14

13

14

12

10

14

10

FLOW

11

FIG. 2.

A

B

C

N

26

27

20

25

23

25

22

25

21

25

20

FLOW

24

0032841

2/2

FIG. 3.

European Patent
Office

**EUROPEAN SEARCH REPORT**

0032841

Application number

EP 81300249.0

## DOCUMENTS CONSIDERED TO BE RELEVANT

| Category | Citation of document with indication, where appropriate, of relevant passages | Relevant to claim |
|---|---|---|
| X | <u>GB - A - 26 743/1912</u> (A. SHEL-MERDINE) <br> + Pages 1-4; fig. 1,2 + <br> -- | 1 |
| | <u>US - A - 2 584 654</u> (C.R. ALDEN) <br> + Pages 2,3; claim 1 + <br> -- | 1 |
| | <u>CH - A - 98 079</u> (F. PAGLIANI) <br> + Page 2, paragraph 1; claim 2 + <br> ---- | 1 |

**CLASSIFICATION OF THE APPLICATION (Int. Cl.³)**

A 23 L 3/32

**TECHNICAL FIELDS SEARCHED (Int. Cl.³)**

A 23 C  3/00
A 23 L  3/00
H 05 B  3/00
B 01 D  1/00
B 01 D  3/00
F 16 L 53/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| X | The present search report has been drawn up for all claims |
|---|---|

| Place of search | Date of completion of the search | Examiner |
|---|---|---|
| VIENNA | 22-04-1981 | TSILIDIS |

EPO Form 1503.1  06.78